**Europäisches Patentamt**

**European Patent Office**

**Office européen des brevets**

(19)

(11) Publication number: **0 241 627**
A1

(12) # EUROPEAN PATENT APPLICATION

(21) Application number: **86830086.4**

(22) Date of filing: **14.04.86**

(51) Int. Cl.⁴: **H 01 G 9/20**

(43) Date of publication of application: **21.10.87**
**Bulletin 87/43**

(84) Designated Contracting States: **AT BE CH DE FR GB LI NL SE**

(71) Applicant: **Merli, Fausto, Via Ramistella, 59, I-06100 Perugia (IT)**

(72) Inventor: **Merli, Fausto, Via Ramistella, 59, I-06100 Perugia (IT)**

(74) Representative: **Mascioli, Alessandro, Prof.Dr., c/o A.N.D.I. Associazione Nazionale degii Inventori Via Lima, 35, I-00198 Roma (IT)**

(54) **A thermoconditioned box for the growing of small plants and the germination of seeds.**

(57) A thermoconditioned box for the growing of small plants, provided with a moto-compressor and/or electric resistances, for feeding heating and/or cooling elements, such as to make the heat distribution along the whole of the exploited surface as uniform as possible and to allow to eliminate, e.g. in summer, the excess heat inside said box, maintaining the temperature lower than the external one according to the needs of the cultivation.

EP 0 241 627 A1

ACTORUM AG

0241627

"A THERMOCONDITIONED BOX FOR THE GROWING OF SMALL PLANTS
AND THE GERMINATION OF SEEDS"


Fausto MERLI - Italy


The present invention concerns a thermoregulated box for the propagation of small plants with an electronic stabilization of the temperature, comprising a moto-compressor or electrically fed resistance system, placed on the bottom, for heating the cultivation soil and for cooling the propagation chamber and favour the development of the small plants.

The box with a moto-compressor system, according to the present invention, responds to the needs of particular cultivations according to the external climat conditions, so as to prevent that inside said box too oftenly the need arises to lower the ambient temperature at the level of the leaves so as to avoid the frequent watering that implies considerable water consumption and limited results.

It is the aim of the present invention to realize a box for the growing of small plants of olive, seeds and other ornamental or fruit plants, that may be housed inside a glasshouse, characterized in a high efficiency and an economical working with a reduction of water and energy consumption.

The aim set ofrth is reached by means of a thermostabilized box consisting in a container with thermoinsulating and transparent walls and cover, provided, in correspondence to the thermoinsulated bottom, with a radiant plate at thermal accumulation, containing the heating elements, covered by the cultivation soil, and also provided with a coil for the cooling of the ambient above said cultivation soil so that by means of a moto-compressor and/or an electric resistance or similar the internal temperature may be controlled and stabilized according to the needs.

Obviously, in possible functional variants, and without leaving the limits of the structure of the box according to the present invention, the stabilization and the control of the internal temperature may take place by means of a heat pump cooling system or an cycle inversion cooling system or a cooling system at the level of the leaves and basal electric heating, or by means of the sole electric base heating, so as to realize heating or cooling elements such as to make the heat distribution along the whole of the exploited surface as uniform as possible, and allows to eliminate, e. g. in summer, the excess heat in the box, maintaining temperatures being lower than the external one, according to the cultivation needs.

The box according to the present invention is provided with an efficient electronic thermostat temperature regulation control system, complete with the contraves temperature programming and display and electronic probe(s), with an electronic group for taking the moisture degree, and with a water metering immission system being in turn electoni- cally controlled.

The present invention will be described more in detail hereinbelow according to the attached drawings showing one preferred embodiment.

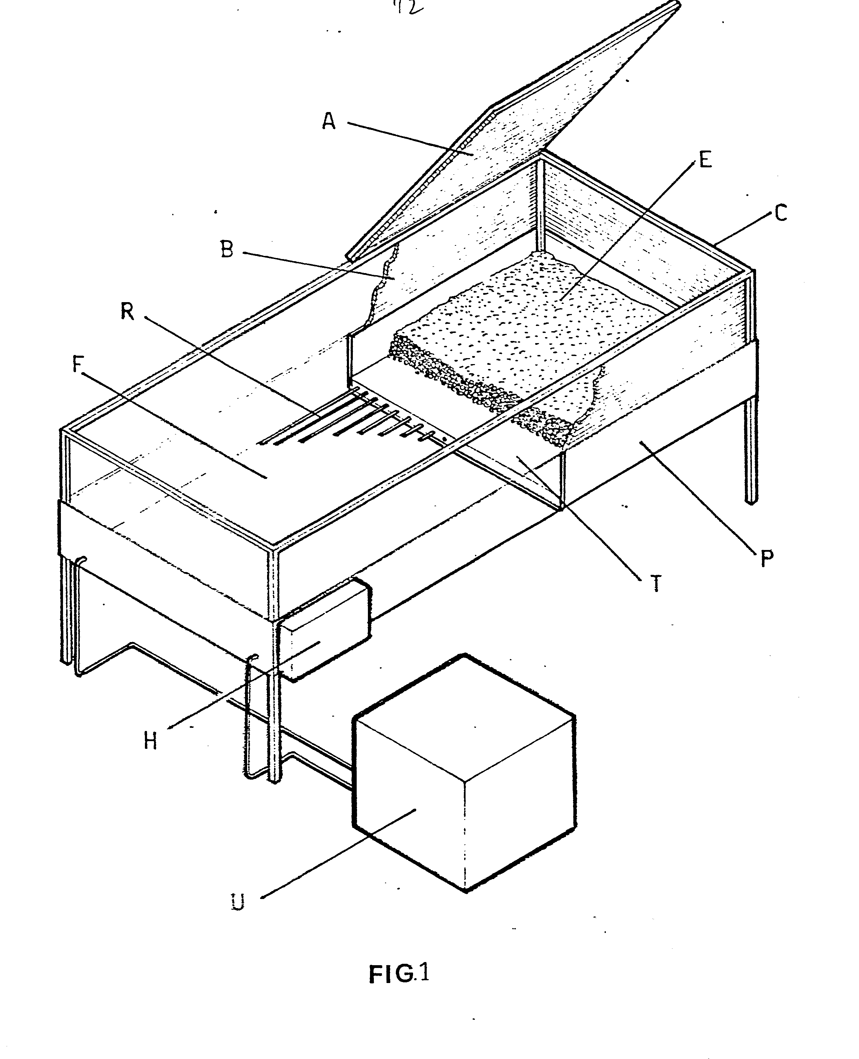

Figure 1 shows an axonometric section of the whole box.

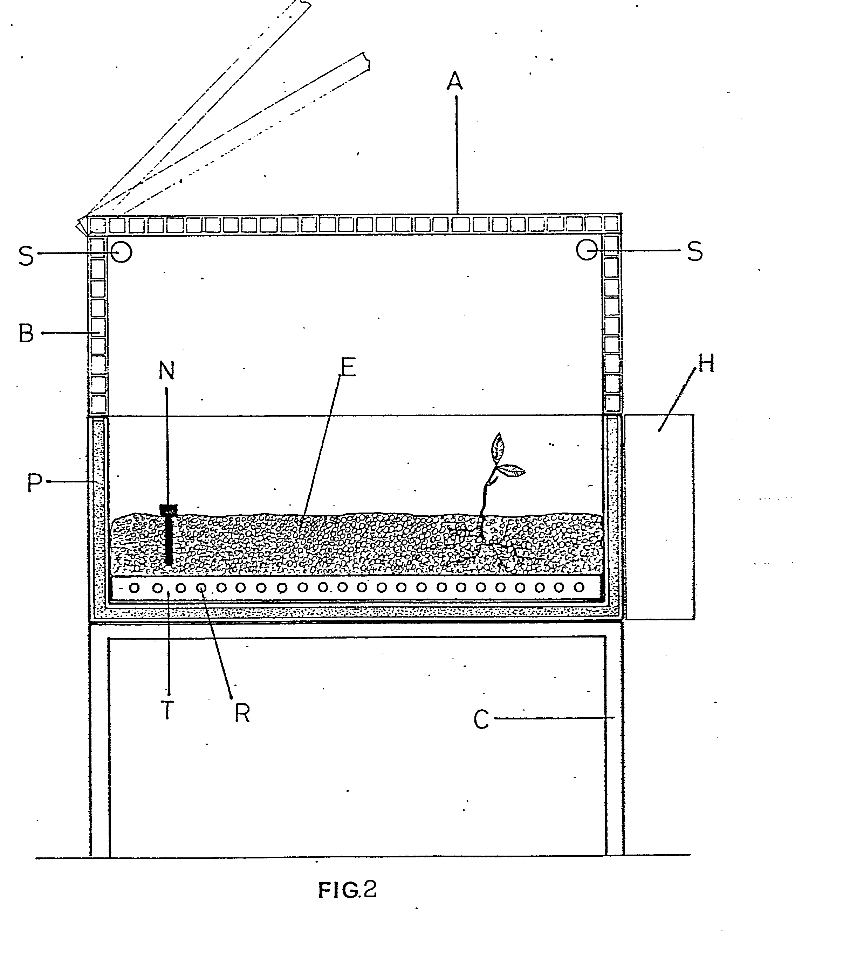

Figure 2 shows a cross section.

Relating to the details of the figures, the box comprises a thermoinsulating and transparent cover A that closes on thermoinsulating and transparent walls B, supported by a support frame C of aluminium, iron, plastic material or similar; in correspondence with the thermoinsulated bottom F the radiant plate T at thermal accumulation is placed, containing the heating electrical, air, liquid or warm gas elements R, and above said plate the cultivation soil E is is provided, e.g. of agripearlite, peat or similar, also closed in thermoinsulating walls P.

The data collected by the thermostatic probe(s) N by means of the electronic control device H, being programmed by the operator, start the moto-compressor housed in the container U and/or the electrical resistance which, according to the needs, may: contemporarily heat up and cool down, or heat up or cool down so as to stabilize on the requested temperature values.

Furthermore, said moto-compressor may operate the cooling coils S so as to maintain in the upper ambient of the box a temperature being lower that the one of the cultivation ambient E, acocrding to the cultivation needs.

In possible variants the box may be provided with an artificial lighting system and a system for taking off the cultivation beds for allowing the superimposition of a plurality of boxes.

0241627

CLAIMS

1. A thermoconditioned box for the growing of small plants, and the germination of seeds, with a uniform heat distribution on the whole exploited surface and eventual elimination of the excess heat, with a lowering of the internal temperatures with respect to the ambient, characterized in a structure will walls (B) and a cover (A) being thermoinsulating and transparent, in a moto-compressor system (U), in a radiant thermic accumulating plate (T) containing a plurality of heating elements (R), in a cooling coil (S) placed in the ambient above cultivation soil (E), in thermostatic probes (N) and in electronic devices (H) for the control of the temperature.

2. A thermoconditioned box according to claim 1, characterized in that said radiant plate (T) contains a plurality of heating elements (R) electrically fed.

3. A thermoconditioned box according to claim 1, characterized in that said radiant plate (T) contains a plurality of heating elements, air- or gas fed.

4. A thermoconditioned box according to claim 1, characterized in that said radiant plate (T) contains a plurality of heating elements, fed by a liquid.

5. A thermoconditioned box according to claim 1, characterized in that the moto-compressor may be replaced by a heat pump cooling device.

6. A thermoconditioned box according to claim 1, characterized in the presence of a cycle inversion cooling device.

7. A thermoconditioned box according to claim 1, characterized in the presence of a heat recovery cooling device.

8. A thermoconditioned box according to claim 1, characterized in the contemporary presence of a cooling device for the leaves and an electric device at base heating.

9. A thermoconditioned box according to claim 1, characterized in the fact that the data collected by said thermostatic probe (N), by means of said electronic controls (H), start the electrically fed resistance and/or the moto-compressor that may also start the cooling coils (S) so as to keep in the upper ambient of the box a lower temperature than the one of the cultivation ambient (E).

FIG.1

0241627

FIG.2

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 606 697 (EDEN)<br>* Column 2, line 58 - column 4, line 46; figures 1-7 * | 1,2 | A 01 G 9/20 |
| A | US-A-3 869 605 (DAVIS)<br>* Column 2, line 52 - column 5, line 5 * | 1,7 | |
| A | FR-A-1 480 585 (FERRAND)<br>* Whole document * | 1,9 | |
| A | EP-A-0 038 213 (AGRI-PROJECTS)<br>* Page 16, line 1 - page 19, line 5; claim * | 1,5,6 | |
| A | GB-A-2 137 464 (MEKLER)<br>* Claims 1,7,11,12; figure 2 * | 1,2,8 | TECHNICAL FIELDS SEARCHED (Int. Cl.4) |
| A | GB-A-2 083 605 (HINDS)<br>* Page 3, lines 20-22; claim 1 * | 1,3 | A 01 G<br>A 01 C |

-----

The present search report has been drawn up for all claims

| Place of search | Date of completion of the search | Examiner |
|---|---|---|
| THE HAGUE | 12-12-1986 | HERYGERS J.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82